# EUROPÄISCHE PATENTSCHRIFT

(11) **EP 3 020 274 B1**
(45) Veröffentlichungstag und Bekanntmachung des Hinweises auf die Patenterteilung: **17.06.2020**
(21) Anmeldenummer: 15194663.9
(22) Anmeldetag: 16.11.2015
(51) Int. Cl.: A01L 7/02

(54) **DÄMPFUNGSSYSTEM FÜR EINEN HUF**
DAMPER SYSTEM FOR A HOOF
SYSTEME D'AMORTISSEMENT POUR SABOT

(30) Priorität: 17.11.2014 DE 202014105514 U
(43) Veröffentlichungstag der Anmeldung: 18.05.2016
(73) Patentinhaber: Hering, Mario, 16244 Schorfheide (DE)
(72) Erfinder: Hering, Mario, 16244 Schorfheide (DE)
(74) Vertreter: Bittner, Thomas L.

(56) Entgegenhaltungen:
- WO-A1-2012/100280
- WO-A1-2014/051485
- WO-A2-2004/103205
- US-A- 5 692 570
- US-A1- 2007 114 045
- US-A1- 2008 229 611

## Beschreibung

Die Offenbarung betrifft ein Dämpfungssystem für einen Huf, insbesondere einen Pferdehuf.

### Hintergrund

Bei Pferden kann es zu verschiedenen Erkrankungen der Hufe kommen, beispielsweise zu Hornspalten. Unter dem Begriff Hornspalten beim Pferd versteht man Risse und Spalten in dem verhornten Teil des Hufs. Hornspalten des Hufs lassen sich zum einen gemäß ihrer Tiefe in oberflächliche Windrisse und durchdringende Hornspalten einteilen. Des Weiteren werden anhand ihrer Lokalisation Vorderwand-Spalten, Seitenwand-Spalten und Trachtenwand-Spalten sowie Eckstreben-Brüche unterschieden.

Zur Behandlung von Hornspalten sind verschiedene Möglichkeiten bekannt.

In dem Dokument DE 417110 ist eine Zugbandklammer offenbart. Die Zugbandklammer weist schräg gegen den Spalt gerichtete Zähne auf. Der Hornspalt soll mittels einer Schraubverbindung geschlossen werden.

Eine andere Vorrichtung zur Behandlung von Hornspalten ist in dem Dokument EP 1 792 539 A1 offenbart. Die Vorrichtung umfasst zwei Halteteile, die gegenüberliegend am Huf befestigt werden, sowie die Halteteile verbindende Einrichtungen.

Schließlich ist in dem Dokument DE 20 2010 002 278 U1 eine Schrauben-Hufklammer beschrieben.

Die bekannten Technologien sind entweder zur Behandlung von Hornspalten nicht optimal geeignet oder in der Anwendung umständlich zu handhaben.

Das Dokument US 2007/0114045 A1 offenbart ein aufblasbares Hufkissen, das zwischen einem Hufeisen und einem Huf eines Pferdes angeordnet ist.

Das Dokument WO 2004/103205 A2 offenbart eine weitere Ausführungsform für ein aufblasbares Hufkissen zur Federung eines Hufs.

Ein weiteres aufblasbares Hufkissen ist aus dem Dokument US 5,692,570 A bekannt.

Das Dokument WO 2012/100280 A1 offenbart ein Hufeisen mit einem Dämpfungsmaterial. Das Dämpfungsmaterial kann als Luftkissen ausgeführt sein.

### Zusammenfassung

Aufgabe ist es, verbesserte Technologien zum Behandeln von Huferkrankungen anzugeben, beispielsweise zur Behandlung von Hornspalten.

Anspruch 1 beschreibt ein Dämpfungssystem gemäß der Erfindung. Weitere Ausführungsformen sind Gegenstand von abhängigen Ansprüchen.

Nach einem Aspekt ist ein Dämpfungssystem für einen Huf gebildet, mit einer Platte, welche eine Oberseite und eine Unterseite aufweist, wobei die Oberseite der Platte einer Hufunterseite zugewandt ist, und einem hohlen Dämpfungselement aus einem elastischen Material, das mit einem Fluid befüllbar ist. Das Dämpfungselement ist auf der Oberseite der Platte angeordnet. An der Unterseite der Platte kann ein Hufeisen angeordnet sein.

Nach einem anderen nicht erfindungsgemäßen Aspekt ist eine Vorrichtung zum Befestigen an einem Huf vorgesehen. Die Vorrichtung weist einen ersten streifenförmigen Abschnitt, der wenigstens zwei Löcher zum Befestigen an dem Huf aufweist, einen zweiten streifenförmigen Abschnitt, der wenigstens zwei Löcher zum Befestigen an dem Huf aufweist, ein erstes Verbindungselement und ein zweites Verbindungselement auf. Das erste Verbindungselement und das zweite Verbindungselement verbinden den ersten streifenförmigen Abschnitt und den zweiten streifenförmigen Abschnitt miteinander.

Gemäß einem weiteren Aspekt ist eine Anordnung zum Anbringen an einem Huf mit einer Vorrichtung und einem Dämpfungssystem vorgesehen.

Die Vorrichtung und das Dämpfungselement können sowohl einzeln als auch in Kombination miteinander an einem Huf, beispielsweise einem Pferdehuf, angebracht werden. Nachfolgend sind Ausführungsformen des Dämpfungssystems offenbart.

An dem Dämpfungselement kann ein Ventil gebildet sein, welches ein Einlassen und Auslassen des Fluids in das Dämpfungselement ermöglicht. Unter dem Begriff Fluid werden Flüssigkeiten und Gase verstanden, beispielsweise Luft.

Das Dämpfungselement kann mit einer bestimmten Menge des Fluids gefüllt werden. Wenn das Dämpfungssystem an der Unterseite des Hufs angeordnet ist, führt dies zu einer Dämpfung beim Auftritt des Hufs auf den Boden. Die Menge des Fluids in dem Dämpfungselement kann angepasst werden, beispielsweise an ein Wachstum des Hufs, um stets eine optimale Dämpfung zu erzielen.

Die Platte kann einen Außenbereich und einen Innenbereich aufweisen, wobei das Dämpfungselement derart auf der Platte angeordnet ist, dass der Innenbereich vollständig mit dem Dämpfungselement bedeckt ist. Der Außenbereich kann mittels eines Werkzeugs bearbeitbar sein. Beispielsweise kann der Außenbereich beschnitten werden, um die Platte an den Huf anzupassen. Auf der Oberseite der Platte können Vorsprünge zur Aufnahme des Dämpfungselements gebildet sein.

Das Dämpfungselement kann mit einer Druckmesseinrichtung gebildet sein. Dies ermöglicht eine Kontrolle des Drucks des Fluids in dem Dämpfungselement Die Druckmesseinrichtung kann in das Dämpfungselement oder in das Ventil integriert sein.

Nach einer Ausführungsform kann das Dämpfungselement aus einem elastischen Kunststoff oder Gummi bestehen.

Die Platte des Dämpfungssystems kann als eine geschlossene Platte gebildet sein.

Die Platte kann aus einem Kunststoff, Silikon oder Leder bestehen.

Das hohle Dämpfungselement ist mit einer ersten Kammer und einer zweiten Kammer gebildet, wobei die erste Kammer mittels einer ersten Ventileinrichtung befüllbar ist und wobei die zweite Kammer mittels einer zweiten Ventileinrichtung befüllbar ist. Die erste Kammer und die zweite Kammer können jeweils mit einer ersten Druckmesseinrichtung und einer zweiten Druckmesseinrichtung gebildet sein. Die erste und zweite Kammer können mit einem Fluid gefüllt sein, derart, dass in der ersten Kammer ein anderer Druck herrscht als in der zweiten Kammer. Alternativ kann der Druck in der ersten und zweiten Kammer gleich groß sein. Die erste und zweite Kammer können mit unterschiedlichen Fluiden gefüllt sein. Ein Trennelement zum Trennen der ersten und zweiten Kammer kann mittig in dem Dämpfungselement gebildet sein.

Im Folgenden werden Beispiele der Vorrichtung näher erläutert.

Die Vorrichtung kann mittels einer Schraubverbindung an dem Huf befestigt werden. Hierzu können Schrauben in die wenigstens zwei Löcher eingeführt und in den Huf geschraubt werden. Beispielsweise können Schrauben aus Messing verwendet werden. Mittels der am Huf befestigten Vorrichtung kann der Hufmechanismus unterbunden werden.

Die Befestigung kann zusätzlich durch ein Klebemittel unterstützt werden. Es kann ein Kunsthorn auf einer dem Huf zugewandten Seite der Vorrichtung aufgetragen werden. Nach Kontakt der Vorrichtung mit dem Huf härtet das Kunsthorn aus.

Wenn der Huf mit der Vorrichtung wächst, kann vorgesehen sein, einen der beiden streifenförmigen Abschnitte abzutrennen. Es verbleibt dann nur ein streifenförmiger Abschnitt an dem Huf.

Nach einem Beispiel kann das erste Verbindungselement und das zweite Verbindungselement voneinander beabstandet sein, derart, dass ein von dem ersten streifenförmigen Abschnitt, dem zweiten streifenförmigen Abschnitt, dem ersten Verbindungselement und dem zweiten Verbindungselement umfasster Bereich frei ist. Der Bereich ist insbesondere frei von dem Material der Vorrichtung. Es kann vorgesehen sein, die Vorrichtung derart am Huf zu befestigen, dass der freie Bereich über einem Hornspalt angeordnet ist.

Die Vorrichtung kann einteilig gebildet sein.

Es kann vorgesehen sein, dass der erste streifenförmige Abschnitt und / oder der zweite streifenförmige Abschnitt mehrere Löcher aufweisen. Beispielsweise können mehrere Schrauben in Löcher an den beiden Enden des ersten streifenförmigen Abschnitts und / oder den beiden Enden des zweiten streifenförmigen Abschnitts zur Befestigung verwendet werden, so dass ein Zwischenbereich zwischen den beiden Enden von Schrauben frei ist. Die mehreren Löcher können in gleichmäßigem Abstand zueinander angeordnet sind. Alternativ können die mehreren Löcher im ersten streifenförmigen Abschnitt und / oder im zweiten streifenförmigen Abschnitt ungleichmäßig verteilt sein.

Nach einer Weiterbildung kann vorgesehen sein, dass der erste streifenförmige Abschnitt und der zweite streifenförmige Abschnitt die gleiche Anzahl von Löchern aufweisen. Alternativ können der erste streifenförmige Abschnitt und der zweite streifenförmige Abschnitt eine ungleiche Anzahl von Löchern aufweisen. Der erste streifenförmige Abschnitt und der zweite streifenförmige Abschnitt können mit gleicher oder ungleicher Länge gebildet sein.

In dem ersten Verbindungselement und / oder in dem zweiten Verbindungselement kann ein Loch gebildet sein. Dies ermöglicht eine Befestigung des ersten und / oder zweiten Verbindungselements am Huf, beispielsweise mittels einer Schraubverbindung. In dem ersten Verbindungselement und / oder dem zweiten Verbindungselement können mehrere Löcher gebildet sein. Die Anzahl der Löcher in dem ersten Verbindungselement und dem zweiten Verbindungselement kann gleich oder ungleich sein.

Der erste streifenförmige Abschnitt, der zweite streifenförmige Abschnitt, das erste Verbindungselement und / oder das zweite Verbindungselement können aus Edelstahl bestehen. Ein Beispiel sieht vor, dass die Vorrichtung einteilig aus Edelstahl gebildet ist. Edelstahl ist kaltverformbar. Dies ermöglicht eine Anpassung der Vorrichtung an den Huf.

### Beschreibung von Ausführungsformen

Im Folgenden sind Ausführungsformen mit Bezug auf Figuren einer Zeichnung näher erläutert. Es zeigen:
- Fig. 1: ein Beispiel einer Vorrichtung zum Befestigen an einem Huf,
- Fig. 2: ein weiteres Beispiel der Vorrichtung,
- Fig. 3: das Beispiel nach Fig. 1 in einer getrennten Version,
- Fig. 4: einen Huf mit der Vorrichtung nach Fig. 1,
- Fig. 5: eine schmematische Darstellung eines Hufs mit einem Dämpfungssystem und
- Fig. 6: eine Ausführungsform des Dämpfungssystems.

Im Folgenden werden für gleiche Komponenten gleiche Bezugszeichen verwendet.

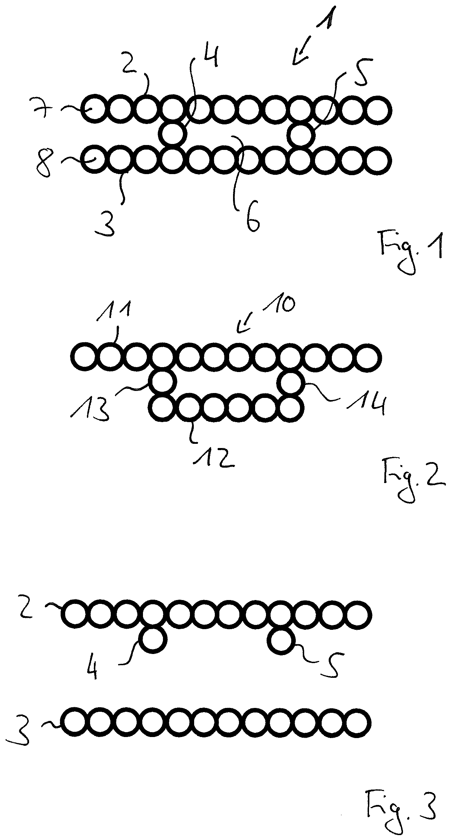

Fig. 1 zeigt ein Beispiel einer Vorrichtung 1 zum Befestigen an einem Huf. Die Vorrichtung 1 weist einen ersten streifenförmigen Abschnitt 2 und einen zweiten streifenförmigen Abschnitt 3 auf. Die Abschnitte 2, 3 sind mittels eines ersten Verbindungselements 4 und eines zweiten Verbindungselements 5 miteinander verbunden. Die beiden Abschnitte 2, 3 und die beiden Verbindungselemente 4, 5 umfassen einen freien Bereich 6. Die in Fig. 1 gezeigte Ausführungsform ist einteilig aus einem Edelstahl gebildet.

Die beiden Abschnitte 2, 3 weisen mehrere Löcher 7, 8 auf. Mittels der Löcher 7, 8 kann die Vorrichtung 1 an einen Huf geschraubt werden. Zusätzlich kann ein Verkleben der Vorrichtung 1 mit dem Huf vorgesehen sein, beispielsweise mittels Kunsthorn.

In Fig. 2 ist ein weiteres Beispiel einer Vorrichtung 10 zum Befestigen an einem Huf dargestellt. Die Vorrichtung 10 weist einen ersten streifenförmigen Abschnitt 11 und einen zweiten streifenförmigen Abschnitt 12 auf, welche mittels eines ersten Verbindungselements 13 und eines zweiten Verbindungselements 14 miteinander verbunden sind. Der zweite Abschnitt 12 ist kürzer als der erste Abschnitt 11. Des Weiteren weist der zweite Abschnitt 12 weniger Löcher auf als der erste Abschnitt 11.

Fig. 3 zeigt die Vorrichtung 1, wobei der zweite streifenförmige Abschnitt 3 von dem ersten streifenförmigen Abschnitt 2 und den beiden Verbindungselementen 4, 5 getrennt wurde. Die Trennung kann beispielsweise mittels einer Kneifzange erfolgen.

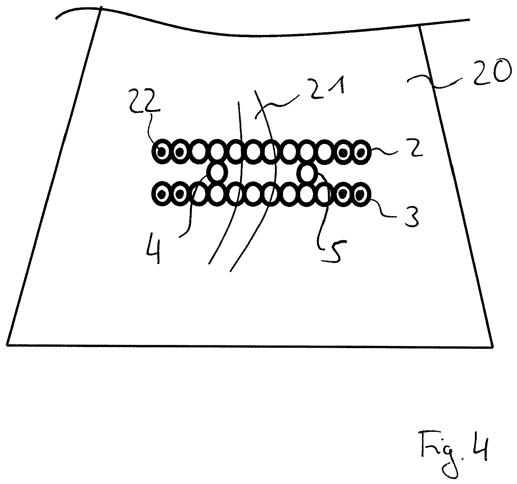

Fig. 4 zeigt eine schematische Darstellung eines Hufs 20 mit einer Hornspalte 21. Über die Hornspalte 21 ist die Vorrichtung 1 angeordnet und mittels Schrauben 22 am Huf befestigt. Dies verhindert eine weitere Ausdehnung der Hornspalte 21.

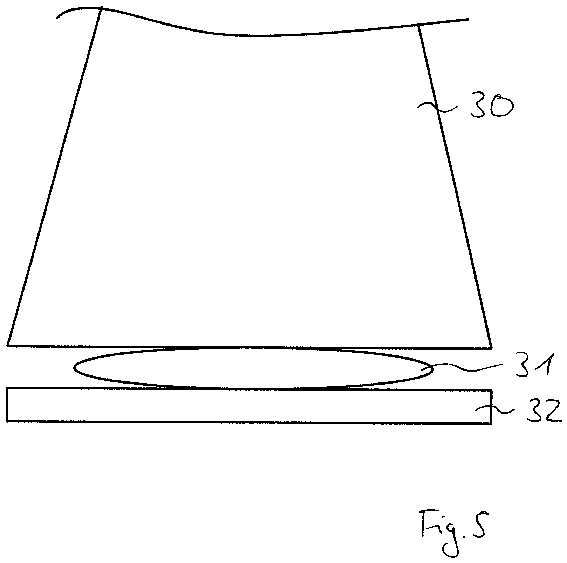

Eine schematische Darstellung eines Dämpfungssystems mit einem Dämpfungselement 31 und einer Platte 32 ist in Fig. 5 gezeigt. Das Dämpfungselement 31 und die Platte 32 sind unterhalb eines Hufs 30 angeordnet. Die Platte 32 besteht in dieser Ausführungsform aus einem Kunststoff. Das Dämpfungselement 31 ist aus einem elastischen Kunststoff gebildet, der einen mit Luft befüllbaren Hohlraum umgibt.

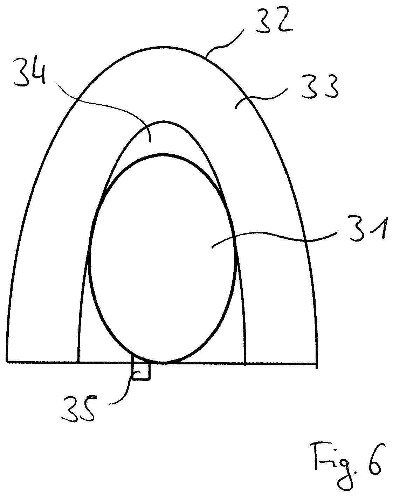

Fig. 6 zeigt eine Ansicht der Oberseite der Platte 32 mit einem Außenbereich 33 und einem Innenbereich 34. Das Dämpfungselement 31 ist im Innenbereich 34 angeordnet. Der Außenbereich 33 kann beschnitten werden, um dessen Form an den Huf anzupassen. Das Dämpfungselement 31 weist ein Ventil 35 auf. In das Ventil 35 kann ein Druckmesser integriert sein.

Die in der Beschreibung, den Figuren und den Ansprüchen offenbarten Merkmale können sowohl einzeln als auch in beliebiger Kombination miteinander für die Verwirklichung von Ausführungsformen relevant sein.

## Patentansprüche

1. Dämpfungssystem für einen Huf (30), mit
- einer Platte (32), welche eine Oberseite und eine Unterseite aufweist, wobei die Oberseite der Platte (32) einer Hufunterseite zugewandt ist, und
- einem hohlen Dämpfungselement (31) aus einem elastischen Material, das mit einem Fluid befüllbar ist,
wobei das Dämpfungselement (31) auf der Oberseite der Platte (32) angeordnet ist, **dadurch gekennzeichnet, dass** das hohle Dämpfungselement (31) mit einer ersten Kammer und einer zweiten Kammer gebildet ist, wobei die erste Kammer mittels einer ersten Ventileinrichtung befüllbar ist und wobei die zweite Kammer mittels einer zweiten Ventileinrichtung befüllbar ist.

2. Dämpfungssystem nach Anspruch 1, wobei die Platte (32) einen Außenbereich (33) und einen Innenbereich (34) aufweist, wobei das Dämpfungselement (31) derart auf der Platte (32) angeordnet ist, dass der Innenbereich (34) vollständig mit dem Dämpfungselement (31) bedeckt ist.

3. Dämpfungssystem nach Anspruch 1 oder 2, wobei das Dämpfungselement (31) mit einer Druckmesseinrichtung gebildet ist.

4. Dämpfungssystem nach einem der vorangehenden Ansprüche, wobei das Dämpfungselement (31) aus einem elastischen Kunststoff oder Gummi besteht.

5. Dämpfungssystem nach einem der vorangehenden Ansprüche, wobei die Platte (32) als eine geschlossene Platte gebildet ist.

6. Dämpfungssystem nach einem der vorangehenden Ansprüche, wobei die Platte (32) aus einem Kunststoff, Silikon oder Leder besteht.

## Claims

1. Damping system for a hoof (30), with
- a plate (32) which has a top side and a bottom side, wherein the top side of the plate (32) faces a hoof bottom side, and
- a hollow damping element (31) made of an elastic material that can be filled with a fluid,
wherein the damping element (31) is arranged on the top side (32) of the plate (32), **characterized in that** the hollow damping element (31) is formed with a first chamber and a second chamber, wherein the first chamber can be filled by means of a first valve device and wherein the second chamber can be filled by means of a second valve device.

2. The damping system according to Claim 1, wherein the plate (32) has an outer area (33) and an inner area (34), wherein the damping element (31) is arranged on the plate (32) in such a way that the inner area (34) is completely covered with the damping element (31).

3. The damping system according to Claim 1 or 2, wherein the damping element (31) is formed with a pressure measuring device.

4. The damping system according to one of the preceding claims, wherein the damping element (31) is made of an elastic plastic or rubber.

5. The damping system according to one of the preceding claims, wherein the plate (32) is formed as a closed plate.

6. The damping system according to one of the preceding requirements, wherein the plate (32) is made of a plastic, silicone, or leather.

## Revendications

1. Système amortisseur pour un sabot (30), pourvu
- d'une plaque (32), laquelle comporte une face supérieure et une face inférieure, la face supérieure de la plaque (32) étant dirigée vers une face inférieure du sabot, et
- d'un élément amortisseur (31) creux, en une matière élastique, qui est susceptible d'être rempli avec un fluide,
l'élément amortisseur (31) étant placé sur la face supérieure de la plaque (32), **caractérisé en ce que** l'élément amortisseur (31) creux est conçu avec un premier compartiment et un deuxième compartiment, le premier compartiment étant susceptible d'être rempli au moyen d'un premier système de soupape et le deuxième compartiment étant susceptible d'être rempli au moyen d'un deuxième système de soupape.

2. Système amortisseur selon la revendication 1, la plaque (32) comportant une zone extérieure (33) et une zone intérieure (34), l'élément amortisseur (31) étant placé sur la plaque (32) de telle sorte que la zone intérieure (34) soit totalement recouverte par l'élément amortisseur (31).

3. Système amortisseur selon la revendication 1 ou 2, l'élément amortisseur (31) étant formé avec un dispositif de mesure de la pression.

4. Système amortisseur selon l'une quelconque des revendications précédentes, l'élément amortisseur (31) étant constitué d'une matière plastique élastique ou d'un caoutchouc.

5. Système amortisseur selon l'une quelconque des revendications précédentes, la plaque (32) étant conçue sous la forme d'une plaque fermée.

6. Système amortisseur selon l'une quelconque des revendications précédentes, la plaque (32) étant constituée d'une matière plastique, d'un silicone ou d'un cuir.
